# EUROPÄISCHE PATENTSCHRIFT

(11) **EP 1 270 080 B1**
(45) Veröffentlichungstag und Bekanntmachung des Hinweises auf die Patenterteilung: **27.01.2010**
(21) Anmeldenummer: 01114618.0
(22) Anmeldetag: 19.06.2001
(51) Int. Cl.: B05B 1/30, F16N 7/14

(54) **Vorrichtung und Verfahren zum Auftrag von Schmieroel**
Device and method of applying lubricant
Dipositif et méthode pour appliquer un lubrifiant

(43) Veröffentlichungstag der Anmeldung: 02.01.2003
(73) Patentinhaber: Ford Global Technologies, LLC, Dearborn, MI 48126 (US)
(72) Erfinder: Michels, Ralf, 51371 Leverkusen (DE); Naumann, Oliver, 56271 Mündersbach (DE)
(74) Vertreter: Drömer, Hans-Carsten

(56) Entgegenhaltungen:
- EP-A- 0 353 881
- FR-A- 2 607 686
- US-A- 5 131 384
- US-A- 5 553 957
- US-A- 5 810 495
- US-A- 6 042 290

## Beschreibung

Die Erfindung betrifft eine Vorrichtung zum Auftragen eines fließfähigen Mediums, insbesondere eines Schmieröls, auf ein Werkstück nach dem Oberbegriff des Anspruchs 1 und ein Verfahren zum Aufbringen eines fließfähigen Mediums mit dieser Vorrichtung.

Bei der Montage von Maschinen ist es häufig erforderlich, die zusammenzubauenden Werkstücke mit einer Schmierölschicht zu versehen, damit der Zusammenbau problemlos und ohne Beschädigung der Teile erfolgen kann. So werden zum Beispiel bei der Montage von Ölfiltern oder Luftfiltern von Kraftfahrzeugmotoren die empfindlichen Gummidichtungen durch ein vorheriges Benetzen mit Schmieröl davor geschützt, beim Zusammenschieben der Bauteile beschädigt zu werden. Das Aufbringen des Schmieröls erfolgt derzeit durch ein Besprühen der Teile mit einem Ölnebel. Dieses Vorgehen hat jedoch den Nachteil, dass überschüssiger Ölnebel in die Umgebungsatmosphäre emittiert wird, was zu Belastungen für das Arbeitspersonal und die Umwelt führt. Des weiteren werden durch den sich ausbreitenden Nebel auch nicht vom Montagevorgang betroffene Gegenstände mit Öl benetzt, was in der Folge zum Anhaften von Schmutz und damit zu Funktionsstörungen führt. Abgesehen von diesen nachteiligen Folgen verursacht der überschüssige Ölnebel natürlich auch zusätzliche Kosten durch den Materialverbrauch. Aus der DE 43 31 394 A1 ist eine Vorrichtung zur Innenbeschichtung von Bohrungen bekannt, bei der über einen Leitungskanal das fließfähige Beschichtungsmittel zu einem Auslass der Vorrichtung geführt wird. Der Auslass ist als Schleuderzylinder ausgebildet, welcher rotiert und dabei aufgrund der Fliehkraft das Beschichtungsmittel radial nach außen auf die Bohrungswände schleudert. Eine derartige Vorrichtung ist jedoch sehr aufwendig und teuer und darüber hinaus nur für das Aufbringen eines Mediums auf die Innenoberflächen von Bohrungen geeignet. Bei anderen Oberflächenformen würde es aufgrund des in alle Richtungen erfolgenden Schleuderns des Mediums zu ähnlichen Problemen wie bei dem Besprühen von Werkstücken kommen.

In der EP 0353881 B1, die die Merkmale des Oberbegriffs zeigt, ist ein Klebstoffauftragwerkzeug beschrieben, mittels dem flüssiger Kleber auf eine Schuhunterseite für die Sohlenverklebung aufgetragen werden kann. Das Klebstoffauftragwerkzeug weist ein Düse in einem Gehäuse auf, in welchem eine Kugel zur Steuerung der Klebstoffzufuhr durch das Gehäuse aufgebracht ist. Die Kugel wird durch eine Feder gegen einen vorstehenden Innenring im Gehäuse gedrückt. In dieser Stellung ist die Klebstoffzufuhr unterbrochen. Wird die Schuhunterseite gegen die Kugel gedrückt, wird diese gegen die Federkraft ins Gehäuse verfahren und gibt den Klebstoff für den Klebstoffauftrag frei. Dieses Klebstoffauftragwerkzeug eignet sich vor allem für den Klebstoffauftrag auf ebenen oder schwach gekrümmten Flächen. Bei stärker gekrümmten Flächen ist dieses Werkzeug weniger geeignet, da ein gleichmäßiger Klebstoffauftrag eine aufwendige Führung des Werkzeuges bzw. des Werkstücks notwendig macht.

Aus der US 5151384 ist ein kombiniertes Gerät zur Massage und Auftragung von Flüssigkeiten bekannt. Mehrere an der Unterseite des Gerätes angeordnete Massagekugeln verschließen ein Flüssigkeitsreservoir. Die Kugeln weisen regelmäßige, kleinere Ausnehmungen und Nuten auf. Bei der Anwendung des Gerätes werden die Kugeln gedreht und transportieren dadurch in den Ausnehmungen bzw. den Nuten die Flüssigkeit aus dem Reservoir nach außen. Ein genaue Dosierung ist damit, insbesondere auf gekrümmten Flächen, nicht möglich.

Vor diesem Hintergrund besteht eine Aufgabe der vorliegenden Erfindung darin, eine Vorrichtung und ein Verfahren zum Aufbringen eines fließfähigen Mediums wie insbesondere eines Schmieröls bereitzustellen, mit der bzw. mit dem in einfacher und kostengünstiger Weise eine gezielte und sparsame Benetzung von gekrümmten Flächen eines Werkstückes möglich ist.

Diese Aufgabe wird durch eine Vorrichtung mit den Merkmalen des Anspruchs 1 gelöst.

Vorteilhafte Ausgestaltungen sind in den Unteransprüchen enthalten.

Die Vorrichtung zum Auftragen eines fließfähigen Mediums wie insbesondere eines Schmieröls, eines flüssigen Klebers, eines feinkörnigen Pulvers oder dergleichen auf die Oberfläche eines Werkstückes enthält mindestens einen Leitungskanal, über welchen das aufzutragende Medium von einem Vorrat zu mindestens einem am Ende des Leitungskanals angeordneten Auslass geleitet werden kann. Die Vorrichtung ist dadurch gekennzeichnet, dass in dem genannten Auslass (oder jeweils in den mehreren Auslässen) ein Verschlusselement angeordnet ist, welches zwischen einer Verschlussposition, in der es den Auslass verschließt, und einer Öffnungsposition, in der es den Auslass freigibt, beweglich ist. Das Verschlusselement wird ferner von einem elastischen Federelement in die Verschlussposition vorgespannt, und es steht nach außen so über den Auslass hervor, dass es bei Berührung eines zu bearbeitenden Werkstückes durch den Kontaktdruck in die Öffnungsposition überführt werden kann.

Die erfindungsgemäße Vorrichtung erlaubt ein gezieltes Auftragen eines fließfähigen Mediums wie zum Beispiel eines Schmieröls auf ein Werkstück. Ein Austritt des Mediums aus der Vorrichtung ist erst dann möglich, wenn der Auslass der Vorrichtung freigegeben wird. Letzteres erfolgt durch die Überführung des in dem Auslass befindlichen Verschlusselementes von der Verschlussposition in die Öffnungsposition. Im Normalzustand befindet sich dabei das Verschlusselement in der Verschlussposition, da es in diese Position durch das Federelement vorgespannt wird. Erst wenn eine entsprechende Gegenkraft die Federkraft überwindet, wird das Verschlusselement in die Öffnungsposition verschoben und der Auslass hierdurch freigegeben. Durch die Konstruktion der Vorrichtung ist dabei gewährleistet, dass die genannte Gegenkraft durch den Kontakt der Vorrichtung beziehungsweise des Verschlusselementes der Vorrichtung mit einem zu benetzenden Werkstück aufgebracht werden kann. Damit dies möglich ist, ragt das Verschlusselement mit einem exponierten Abschnitt über den Auslass hinaus, so dass es bei Annäherung an ein Werkstück als erstes Teil mit dem Werkstück in Kontakt kommt. Durch den dabei entstehenden Kontaktdruck wird das Verschlusselement dann in die Öffnungsposition verschoben, wobei die Dimensionierung des Auslasses und des Verschlusselementes in vorteilhafter Weise so gewählt ist, dass in der Öffnungsposition des Verschlusselementes auch andere Teile der Vorrichtung - wie insbesondere der Rand des Auslasses - mit dem Werkstück in Kontakt kommen. Durch das resultierende "Aufsitzen" der Vorrichtung auf dem Werkstück wird eine weitere Druckausübung auf das Verschlusselement unterbunden.

Die beschriebene Konstruktion der Vorrichtung hat den Vorteil, dass diese verhältnismäßig einfach und kostengünstig zu realisieren ist und dass sie eine besonders einfache Handhabung erlaubt. Zum Aufbringen eines Mediums wie etwa eines Schmieröls auf ein Werkstück muss lediglich die Vorrichtung mit dem Verschlusselement voran mit dem Werkstück in Kontakt gebracht werden. Sobald ein Kontakt besteht und ein entsprechender Kontaktdruck erzeugt wird, öffnet sich der Auslass der Vorrichtung von selbst, um den Austritt des Mediums zu erlauben. Das Medium wird somit sowohl zeitlich als auch räumlich äußerst gezielt auf das Werkstück aufgebracht. Eine Emission von Medium in die Atmosphäre ist ausgeschlossen, wodurch die Vorrichtung entsprechende ökonomische und ökologische Vorteile erzielt.

Gemäß einer bevorzugten Ausgestaltung der Vorrichtung wird der mindestens eine Auslass für das Medium durch einen am Ende eines Leitungskanals befindlichen Hohlraum gebildet, wobei in dem Hohlraum das Verschlusselement angeordnet ist und wobei der Hohlraum mit dem Verschlusselement nach außen hin durch eine Maske abgedeckt wird. Die Maske weist eine Öffnung auf, welche derart geformt und dimensioniert ist, dass diese nur einen teilweisen, nicht jedoch einen vollständigen Durchtritt des Verschlusselementes erlaubt, und dass diese von dem Verschlusselement verschlossen wird, wenn sich dieses in seiner Verschlussposition befindet. Über die Verbindung mit dem Leitungskanal wird der Hohlraum eines derartigen Auslasses mit Medium versorgt. Ein Austritt dieses Mediums nach außen kann prinzipiell durch die Öffnung in der Maske erfolgen, wobei diese Öffnung jedoch im Normalfall durch das Verschlusselement verschlossen ist. Erst wenn das Verschlusselement zurückgeschoben wird, wird die Öffnung freigegeben und der Austritt von Medium nach außen möglich. Durch eine entsprechende Dimensionierung von Verschlusselement und Öffnung kann dabei gewährleistet werden, dass ein relativ großer Öffnungsquerschnitt in der Öffnungsposition des Verschlusselementes freigegeben wird, so dass ein großer Volumenstrom an Medium austreten kann. Der teilweise Durchtritt des Verschlusselementes durch die Öffnung nach außen ermöglicht, dass dieser durchtretende Teil des Verschlusselementes mit einem Werkstück in Kontakt gebracht und dabei aufgrund des Kontaktdruckes unter Freigabe der Öffnung in den Hohlraum hineingeschoben werden kann.

Gemäß einer Weiterbildung der zuletzt erläuterten Ausgestaltung ist im Hohlraum des Auslasses eine Feder angeordnet, welche mit dem Verschlusselement in Kontakt steht und dieses gegen die Öffnung in der Maske drückt. Dies führt dazu, dass das Verschlusselement in gewünschter Weise in die Verschlussposition vorgespannt wird. Die Feder wird dabei platzsparend in einem ohnehin vorhandenen Hohlraum untergebracht.

Das Verschlusselement kann im Prinzip jede beliebige Form annehmen, sofern nur seine Beweglichkeit zwischen einer Verschlussposition und einer Öffnungsposition und das damit verbundene Verschließen beziehungsweise Freigeben des Auslasses gewährleistet ist. Vorzugsweise weist das Verschlusselement jedoch die symmetrische Form einer Kugel oder eines Zylinders auf.

Die zuletzt genannten Formen sind insbesondere dann geeignet, wenn das Verschlusselement verschiebebeweglich und drehbeweglich im Auslass angebracht werden soll. Die Drehbeweglichkeit kann in diesem Falle für eine Förderung des Mediums zum Auslass ausgenutzt werden. Dabei haftet Medium in der Öffnungsposition des Verschlusselementes am Verschlusselement an und wird durch die Drehung des Verschlusselementes nach außen befördert.

Gemäß einer Vorrichtung der Erfindung weist diese eine, konvex gekrümmte oder konkav gekrümmte Arbeitsoberfläche auf, in welcher mehrere Auslässe für das Medium angeordnet sind. Die Arbeitsoberfläche ist derjenige Teil der Vorrichtung, der an ein zu benetzendes Werkstück herangeführt und mit diesem in Kontakt gebracht wird. Vorzugsweise ist diese Arbeitsoberfläche entsprechend (das heißt komplementär) der Form des zu bearbeitenden Werkstückes ausgebildet. Bei zylindrischen Werkstücken ist diese vorzugsweise konkav gekrümmt gemäß der Innenoberfläche eines Hohlzylinders und bei hohlzylindrischen Werkstücken ist diese vorzugsweise als konvex gekrümmter Zylinder ausgebildet. Die Anpassung der Form der Arbeitsoberfläche an die Form des Werkstückes hat den Vorteil, dass Arbeitsoberfläche und Werkstück über einen größeren Bereich einander angenähert werden können, wobei mehrere Auslässe der Vorrichtung gleichzeitig in Kontakt mit dem Werkstück treten und Medium auf das Werkstück übertragen können.

Die mehreren Auslässe bei der zuletzt genannten Ausgestaltung der Vorrichtung werden vorzugsweise von einer zentralen Zuleitung für das Medium versorgt, von welcher Abzweigungen zu den jeweiligen Auslässen abgehen. Gegebenenfalls kann die Vorrichtung auch einen modularen Aufbau aufweisen, bei welchem verschiedene "Arbeitsköpfe" mit den Abzweigungen und Auslässen an einen Basiskörper mit der zentralen Zuleitung für das Medium gekoppelt werden können.

Die Erfindung betrifft ferner ein Verfahren zur Aufbringung eines fließfähigen Mediums wie insbesondere eines Schmieröls auf ein Werkstück. Das Verfahren ist dadurch gekennzeichnet, dass eine Vorrichtung der oben erläuterten Art zur Aufbringung verwendet wird, also eine Vorrichtung, bei der das Medium über mindestens einen Leitungskanal zu mindestens einem Auslass geführt wird, wobei der Auslass durch ein federbelastetes Verschlusselement verschlossen wird. Bei dem Verfahren steht das mit der Vorrichtung aufgetragene Medium unter Überdruck relativ zum Atmosphärendruck, wobei der Überdruck jedoch verhältnismäßig gering sein kann und typischerweise einen Wert von 0,5 bar aufweist. Das mindestens eine Verschlusselement der Vorrichtung wird durch den Kontakt mit dem Werkstück von der Verschlussposition in die Öffnungsposition überführt.

Mit einem derartigen Verfahren kann fließfähiges Medium wie zum Beispiel Schmieröl äußerst gezielt auf ein Werkstück aufgebracht werden. Der Überdruck, unter welchem das Medium steht, sorgt dabei für ein selbsttätiges Austreten des Mediums, sobald das Verschlusselement den Auslass freigibt. Der Austritt des Mediums hängt somit nicht von der Schwerkraft und einer bestimmten Haltung der Vorrichtung ab. Durch die Höhe des Druckes kann festgelegt werden, mit welcher Flussrate das Medium austreten soll.

Vorzugsweise wird eine Vorrichtung eingesetzt, die mehrere Auslässe mit Verschlusselementen enthält. Diese Vorrichtung wird dann so angewendet, dass mehrere der Verschlusselemente (vorzugsweise alle) gleichzeitig mit dem Werkstück in Kontakt gebracht werden. Der Austritt des Mediums kann daher parallel an verschiedenen Stellen gleichzeitig erfolgen, was eine entsprechend schnellere Benetzung des Werkstückes ermöglicht.

Ferner wird vorzugsweise eine Vorrichtung eingesetzt, bei welcher das Verschlusselement drehbeweglich gelagert ist. Eine solche Vorrichtung kann dann so angewendet werden, dass diese entlang der Oberfläche des Werkstückes bewegt wird, wobei das Verschlusselement in der Öffnungsposition auf der Oberfläche des Werkstückes abrollt. Durch die Rollbewegung trägt das Verschlusselement zu einer aktiven Förderung des Mediums aus der Vorrichtung heraus auf das Werkstück bei.

Im Folgenden wird die Erfindung anhand der Figuren beispielhaft näher erläutert. Es zeigen:
- Fig. 1: einen Querschnitt durch eine Vorrichtung zum punktförmigen Auftragen von Schmieröl die nicht Teil der vorliegenden Erfindung ist;
- Fig. 2: eine Vorrichtung zum mehrstelligen Auftragen von Schmieröl auf eine ebene Fläche die nicht Teil der vorliegenden Erfindung ist;
- Fig. 3: eine Vorrichtung zum Auftragen von Schmieröl auf die Innenoberfläche einer Bohrung in einer Seitenansicht ihrer Teile und in einem Querschnitt; und
- Fig. 4: im Querschnitt eine Vorrichtung zum Auftragen von Schmieröl auf die Außenoberfläche eines zylindrischen Werkstückes.

In den Figuren wird die vorliegende Erfindung anhand des Beispiels des Auftragens von Schmieröl erläutert. Die Erfindung ist jedoch nicht auf diese Anwendung begrenzt und kann grundsätzlich auch beim Auftragen ähnlicher fließfähiger Medien wie etwa von Klebern eingesetzt werden, wenn ein punktweiser Auftrag des Mediums erwünscht beziehungsweise ausreichend ist.

Die dargestellten Vorrichtungen sind insbesondere zum Beölen von Werkstücken bei der Montage von Kraftfahrzeugteilen geeignet. Nach dem derzeitigen Stand der Technik findet ein solches Beölen in der Regel durch das Versprühen des Öls über Sprühdüsen statt. Die dabei auftretenden Emissionen von Sprühnebel werden häufig aus Kostengründen nicht abgesaugt und stellen somit eine Belastung für die Umgebung dar. Diese nachteilige Situation wird durch die erfindungsgemäßen Vorrichtung vermieden.

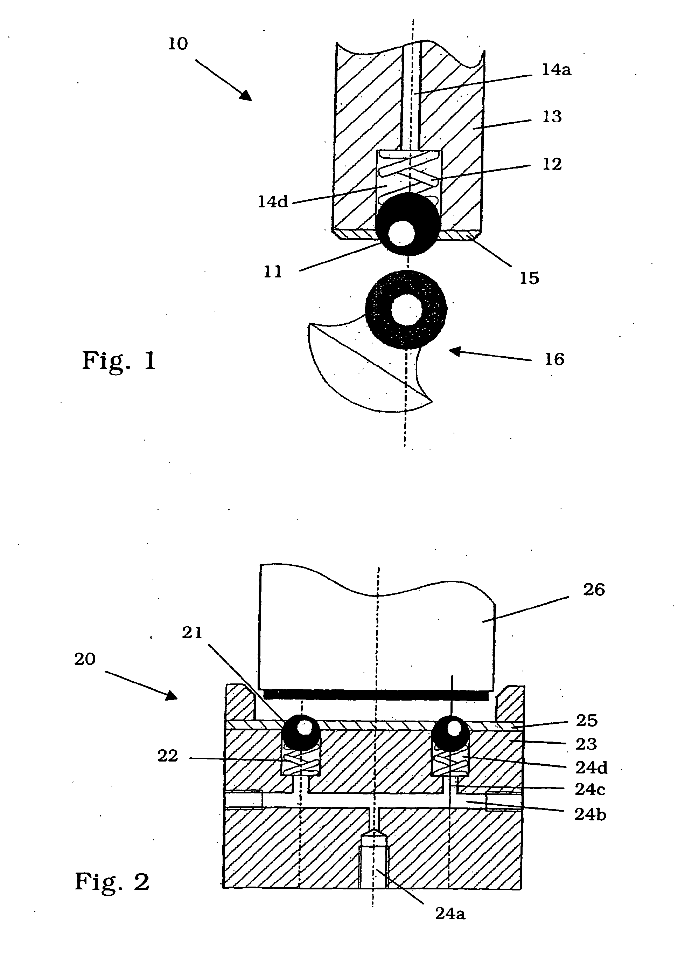

Die in Figur 1 dargestellte Vorrichtung 10 gibt dabei das Grundprinzip wider. Die Vorrichtung 10 besteht aus einem Basiskörper 13, welcher zumindest an seinem Arbeitsende etwa stiftförmig ausgestaltet ist. Durch den Basiskörper 13 verläuft zentral ein Leitungskanal 14a, welcher einen Vorrat für das aufzutragende Schmieröl (nicht dargestellt) mit dem Auslass der Vorrichtung 10 verbindet.

Der Auslass der Vorrichtung 10 wird durch einen am Ende des Leitungskanals 14a befindlichen Hohlraum 14d gebildet, welcher durch eine Maske 15 abgedeckt ist. In dem Hohlraum befindet sich eine Kugel 11, die bevorzugt aus Hartmetall besteht und die durch die Öffnung in der Maske 15 teilweise nach außen ragt. Die genannte Öffnung ist jedoch kleiner als der Durchmesser der Kugel 11, so dass die Kugel 11 nicht aus dem Hohlraum 14d heraustreten kann.

Eine sich am in der Zeichnung oberen Ende des Hohlraumes 14d abstützende Spiralfeder 12 drückt die Kugel 11 gegen die Öffnung in der Maske 15, so dass die Kugel 11 die Öffnung gerade verschließt. In dieser "Verschlussposition" der Kugel 11, der in der Figur dargestellt ist, kann somit kein Öl aus der Vorrichtung 10 austreten.

Erst wenn die Vorrichtung 10 beziehungsweise die Kugel 11 mit einem Werkstück, zum Beispiel einer Kurbelwelle 16, in Kontakt gebracht wird und die Kugel 11 dabei gegen den Druck der Feder 12 in den Hohlraum 14d hineingedrückt wird ("Öffnungsposition"), wird die Öffnung in der Maske 15 freigegeben, und es kann zu einem Austritt von Schmieröl kommen. Dieses Schmieröl wird dann punktgenau auf das Werkstück 16 übertragen. Wenn die Vorrichtung 10 nicht nur senkrecht auf das Werkstück gedrückt wird, sondern auch tangential an diesem entlang geführt wird, kann es darüber hinaus zu einer Rotation der Kugel 11 kommen, wobei die Kugel 11 Schmieröl mitschleppt und an ihrer Unterseite auf das Werkstück 16 aufträgt.

Anders als bei einem Versprühen von Schmieröl entstehen bei der Anwendung der Vorrichtung 10 keine Spritznebel, welche in die Umgebung emittiert würden. Eventuell entstehendes Lecköl kann komplett aufgefangen und wiederverwendet werden. Eine derartige Vorrichtung ist daher sehr sparsam im Verbrauch und absolut verschleiß- und wartungsfrei.

Ferner ist von Vorteil, dass die Vorrichtung 10 mit sehr niedrigem Druck des Schmieröls von typischerweise 0,5 bar betrieben werden kann. Das aus externen Drucktanks über ein Rohrleitungssystem (nicht dargestellt) bereitgestellte Schmieröl wird dabei über ein Feindrosselventil stark in seinem Druck reduziert und den Auslässen der Vorrichtung bereitgestellt.

Figur 2 zeigt im Querschnitt eine erweiterte Vorrichtung 20, bei welcher mehrere Auslässe, von denen zwei in der Figur erkennbar sind, vorhanden sind. Teile, die denjenigen von Figur 1 entsprechen, sind beginnend bei der Ziffer 20 (statt 10) mit korrespondierenden Bezugszeichen wie in Figur 1 versehen.

Über ein Feindrosselventil (nicht dargestellt) der Vorrichtung 20 zugeführtes Schmieröl wird über eine zentrale Zuleitung 24a in einen Ringkanal 24b geleitet und von diesem verteilt. Vom Ringkanal 24b gehen Abzweigungen 24c ab, an deren Enden sich die Auslässe für das Schmieröl befinden. Diese Auslässe werden wiederum durch Hohlräume 24d gebildet, die durch eine Maske 25 abgedeckt sind. Die Öffnungen der Maske 25 werden durch Hartmetallkugeln 21 verschlossen, die durch Federn 22 in ihre Verschlusspositionen vorgespannt werden.

Die Maske 25 bildet eine ebene Fläche, aus welcher nur die Kugeln 21 ein Stück weit nach oben hervorstehen. Bei Kontakt dieser ebenen Fläche mit einem ebenfalls ebenen Werkstück, zum Beispiel einem Ölfilter 26, werden die Kugeln 21 gleichzeitig gegen die Federkraft in den Hohlraum 24d gedrückt und die Öffnungen in der Maske 25 somit freigegeben. Dadurch kann es an allen Auslässen gleichzeitig zu einem Austritt von Schmieröl kommen, so dass das Werkstück 26 in einem einzigen Arbeitsschritt geölt werden kann.

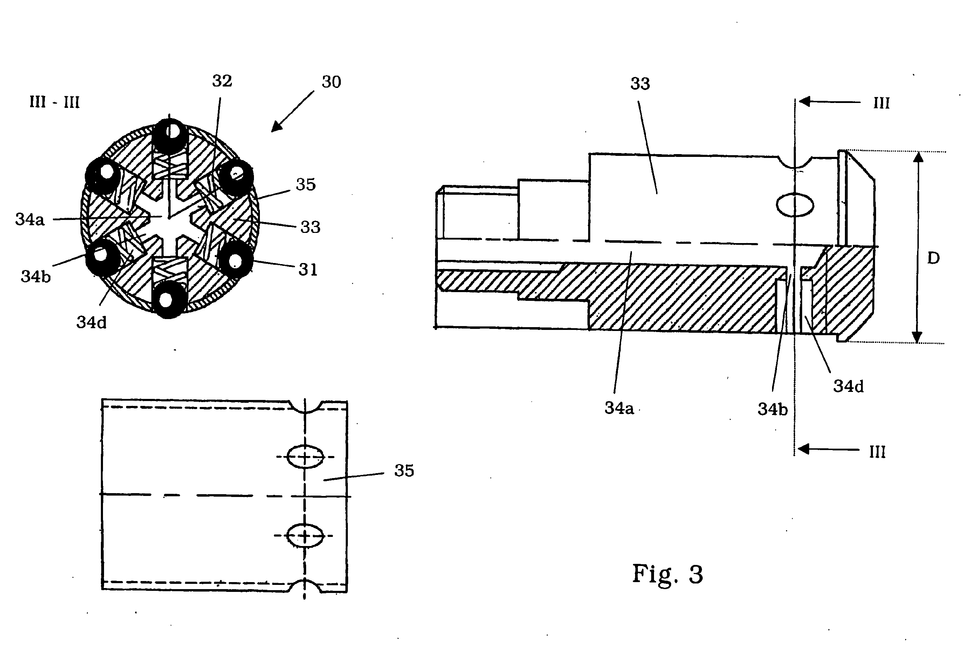

Figur 3 zeigt ähnlich wie Figur 2 eine Vorrichtung 30 zum Aufbringen von Schmieröl aus mehreren Auslässen. Ähnliche Bauteile sind hier wiederum mit korrespondierenden Bezugszeichen, beginnend bei der Ziffer 30, versehen. Im rechten Teil von Figur 3 ist der Basiskörper 33 der Vorrichtung 30 in einer Seitenansicht und teilweise im Schnitt dargestellt. Zu erkennen ist hier die zentrale Zuleitung 34a für das Schmieröl, von welcher radial nach außen Abzweigleitungen 34b abgehen und zu Hohlräumen 34d führen.

Wie aus dem Schnitt entlang der Linie III-III im linken oberen Teil von Figur 3 erkennbar ist, hat der Basiskörper 33 eine zylindrische Form, wobei sechs Auslässe über den Umfang des Zylinders gleichmäßig verteilt sind. Die Auslässe werden nach außen hin durch eine zylindrische, hülsenförmige Maske 35 (links unten in Figur 3 in der Seitenansicht dargestellt) abgedeckt. Die Auslässe selbst werden jeweils durch einen Hohlraum 34d gebildet, in dem sich in bekannter Weise ein Federelement 32 und eine Hartmetallkugel 31 befindet.

Die in Figur 3 dargestellte Vorrichtung 30 ist dazu geeignet, zylindrische Bohrungen zu beölen, deren Innendurchmesser größer oder gleich dem Außendurchmesser D der Vorrichtung 30 ist.

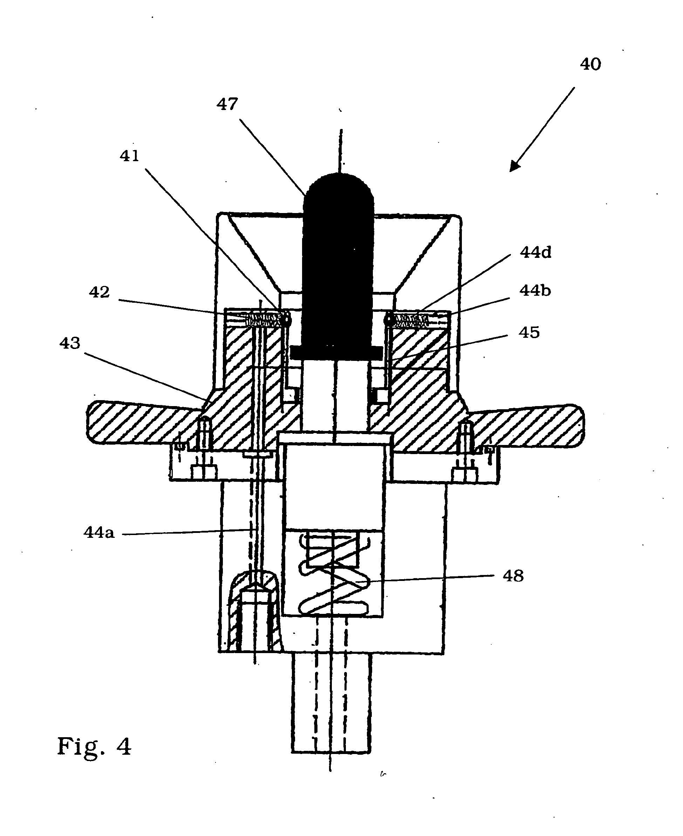

In Figur 4 ist eine Vorrichtung dargestellt, mit welcher zylindrische Außenoberflächen von Hülsen, zum Beispiel eines Öleinfüllstutzens, beölt werden können. Gleiche Teile sind wiederum mit korrespondierenden Bezugszeichen, beginnend bei der Ziffer 40, versehen.

Die Zufuhr von Schmieröl erfolgt durch einen Leitungskanal 44a, welcher durch den Basiskörper 43 der Vorrichtung 40 verläuft. An seinem Ende geht der Leitungskanal 44a in einen Ringkanal 44b über, von welchem radial nach innen zeigend die Auslässe für das Schmieröl abgehen. Die Auslässe werden durch eine hülsenförmige Maske 45 abgedeckt, wobei die den Auslässen zugeordneten Öffnungen der Maske durch ein kugelförmiges Verschlusselement 41 verschlossen werden. Das Verschlusselement 41 liegt in einem Hohlraum 44d und wird durch Federn 42 in seine Verschlussposition vorgespannt.

In der Zentralachse der Vorrichtung 40 ragt ein Zapfen 47 senkrecht nach oben, wobei der Zapfen 47 an seinem unteren Ende sich auf einer Spiralfeder 48 abstützt. Unter Zusammendrücken der Feder 48 kann der Zapfen 47 in axialer Richtung in die Vorrichtung 40 hineingeschoben werden. Dieses ist insbesondere dann der Fall, wenn ein hülsenförmiges Werkstück (nicht dargestellt) über den Zapfen 47 gestülpt wird und zusammen mit dem Zapfen 47 in die Vorrichtung 40 hineingedrückt wird. Ein solches hülsenförmiges Werkstück steht dabei mit den Kugeln 41 der Auslässe des Schmieröls in Kontakt und drückt diese so weit in die jeweiligen Auslässe hinein, dass die Auslässe freigegeben werden und Schmieröl austreten kann. Dieses Schmieröl benetzt dann die vorbeigeführte Oberfläche des hülsenförmigen Werkstücks.

## Patentansprüche

1. Vorrichtung (30, 40) zum Auftragen eines fließfähigen Mediums, insbesondere eines Schmieröls, auf ein Werkstück, enthaltend mindestens einen Leitungskanal (34a-b; 44a-b) mit mindestens einem Auslass für das Medium, wobei im Auslass ein zwischen einer Verschlussposition und einer Öffnungsposition bewegliches Verschlusselement (31, 41) angeordnet ist, welches von einem Federelement (32, 42) in die Verschlussposition vorgespannt wird und welches so über den Auslass nach außen hervorsteht, dass es durch den Kontaktdruck mit einem zu bearbeitenden Werkstück in die Öffnungsposition überführt werden kann,
**dadurch gekennzeichnet, dass**
die Vorrichtung eine zylindrische Arbeitsoberfläche für zylindrische Werkstücke aufweist, die Arbeitsoberfläche konvex gekrümmt als Zylinder (35) oder konkav gekrümmt als Hohlzylinder (45) ausgeführt ist, und in der Arbeitsoberfläche mehrere der Auslässe für das Medium angeordnet sind.

2. Vorrichtung nach Anspruch 1, **dadurch gekennzeichnet, dass** der Auslass durch einen am Ende eines Leitungskanals (34b; 44b) befindlichen Hohlraum (34d, 44d) gebildet wird, in welchem das Verschlusselement (31, 41) angeordnet ist und welcher nach außen durch eine Maske (45) abgedeckt wird, wobei die Maske eine Öffnung aufweist, welche einen nur teilweisen Durchtritt des Verschlusselementes erlaubt und welche durch das Verschlusselement in dessen Verschlussposition verschlossen wird.

3. Vorrichtung nach Anspruch 2, **dadurch gekennzeichnet, dass** im Hohlraum (34d, 44d) des Auslasses eine Feder (32, 42) angeordnet ist, welche mit dem Verschlusselement (31, 41) in Kontakt steht und es gegen die Öffnung der Maske (35, 45) drückt.

4. Vorrichtung nach einem der Ansprüche 1 bis 3, **dadurch gekennzeichnet, dass** das Verschlusselement (31, 41) die Form einer Kugel oder eines Zylinders aufweist.

5. Vorrichtung nach einem der Ansprüche 1 bis 4, **dadurch gekennzeichnet, dass** das Verschlusselement(31, 41) verschiebebeweglich und drehbeweglich im Auslass gelagert ist.

6. Vorrichtung nach einem der Ansprüche 1 bis 5, **dadurch gekennzeichnet, dass** diese eine zentrale Zuleitung (34a, 44a) aufweist, von welcher Abzweigungen (24b-c, 34b, 44b) zu allen Auslässen abgehen.

7. Verfahren zur Aufbringung eines fließfähigen Mediums, insbesondere eines Schmieröls, auf ein zylindrisches Werkstück, **dadurch gekennzeichnet, dass** eine Vorrichtung (40) nach mindestens einem der Ansprüche 1 bis 6 verwendet wird, wobei das Medium unter Druck steht und ein Verschlusselement (31, 41) durch Kontakt mit dem Werkstück von der Verschlussposition in die Öffnungsposition überführt wird, und wobei die Vorrichtung (30, 40) mehrere Auslässe mit Verschlusselementen (31, 41) enthält, und dass mehrere Verschlusselemente gleichzeitig mit dem Werkstück (26) in Kontakt gebracht werden.

8. Verfahren nach Anspruch 7, **dadurch gekennzeichnet, dass** ein Verschlusselement (31, 41) auf der Oberfläche des Werkstücks (16, 26) abrollt.

## Claims

1. Device (30, 40) for applying a flowable medium, in particular a lubricating oil, onto a workpiece, said device containing at least one duct (34a-b; 44a-b) having at least one outlet for the medium, a closure element (31, 41) being arranged in the outlet, which closure element can be moved between a closure position and an opening position, is prestressed by a spring element (32, 42) into the closure position and protrudes outward over the outlet in such a manner that it can be transferred into the opening position by the contact pressure with a workpiece to be treated, **characterized in that** the device has a cylindrical working surface for cylindrical workpieces, the working surface is designed as a convexly curved cylinder (35) or a concavely curved hollow cylinder (45) and a plurality of the outlets for the medium are arranged in the working surface.

2. Device according to Claim 1, **characterized in that** the outlet is formed by a cavity (34d, 44d) which is situated at the end of a duct (34b; 44b) and in which the closure element (31, 41) is arranged and which is covered to the outside by a mask (45), the mask having an opening which allows the closure element to only partially pass through and which is closed by the closure element in its closure position.

3. Device according to Claim 2, **characterized in that** a spring (32, 42) is arranged in the cavity (34d, 44d) of the outlet, which spring is in contact with the closure element (31, 41) and presses it against the opening of the mask (35, 45).

4. Device according to one of Claims 1 to 3, **characterized in that** the closure element (31, 41) is in the form of a sphere or a cylinder.

5. Device according to one of Claims 1 to 4, **characterized in that** the closure element (31, 41) is mounted displaceably and rotatably in the outlet.

6. Device according to one of Claims 1 to 5, **characterized in that** said device has a central feedline (34a, 44a) from which branches (24b-c, 34b, 44b) to all of the outlets originate.

7. Method for depositing a flowable medium, in particular a lubricating oil, onto a cylindrical workpiece, **characterized in that** a device (40) according to at least one of Claims 1 to 6 is used, the medium being under pressure and the closure element (31, 41) being transferred from the closure position into the opening position by contact with the workpiece, and the device (30, 40) containing a plurality of outlets having closure elements (31, 41), and **in that** a plurality of closure elements are simultaneously brought into contact with the workpiece (26).

8. Method according to Claim 7, **characterized in that** a closure element (31, 41) rolls along the surface of the workpiece (16, 26).

## Revendications

1. Dispositif (30, 40) pour appliquer un fluide coulant, en particulier un lubrifiant, sur une pièce, comprenant au moins un canal de conduite (34a-b; 44a-b) avec au moins une sortie pour le fluide, dans lequel un élément de fermeture (31, 41) mobile entre une position de fermeture et une position d'ouverture est disposé dans la sortie, lequel est précontraint dans la position de fermeture par un élément de ressort (32, 42) et est saillant vers l'extérieur au-delà de la sortie, de telle manière qu'il puisse être amené dans la position d'ouverture par la pression de contact avec une pièce à usiner, **caractérisé en ce que** le dispositif comprend une surface de travail cylindrique pour des pièces cylindriques, la surface de travail est incurvée de façon convexe en forme de cylindre (35) ou incurvée de façon concave en forme de cylindre creux (45), et plusieurs des sorties pour le fluide sont disposées dans la surface de travail.

2. Dispositif selon la revendication 1, **caractérisé en ce que** la sortie est formée par un espace creux (34d, 44d) se trouvant à l'extrémité d'un canal de conduite (34b; 44b) et dans lequel l'élément de fermeture (31, 41) est disposé, et qui est recouvert vers l'extérieur par un masque (45), dans lequel le masque présente une ouverture qui ne permet qu'un passage partiel de l'élément de fermeture et qui est fermée par l'élément de fermeture dans sa position de fermeture.

3. Dispositif selon la revendication 2, **caractérisé en ce qu'**un ressort (32, 42) est disposé dans l'espace creux (34d, 44d) de la sortie, lequel est en contact avec l'élément de fermeture (31, 41) et le pousse contre l'ouverture du masque (35, 45).

4. Dispositif selon l'une quelconque des revendications 1 à 3, **caractérisé en ce que** l'élément de fermeture (31, 41) présente la forme d'une sphère ou d'un cylindre.

5. Dispositif selon l'une quelconque des revendications 1 à 4, **caractérisé en ce que** l'élément de fermeture (31, 41) est monté de façon mobile en translation et en rotation dans la sortie.

6. Dispositif selon l'une quelconque des revendications 1 à 5, **caractérisé en ce que** celui-ci présente une conduite d'arrivée centrale (34a, 44a), de laquelle partent des dérivations (24b-c, 34b, 44b) vers toutes les sorties.

7. Procédé pour appliquer un fluide coulant, en particulier un lubrifiant, sur une pièce cylindrique, **caractérisé en ce que** l'on utilise un dispositif (40) selon au moins une des revendications 1 à 6, dans lequel le fluide se trouve sous pression et un élément de fermeture (31, 41) est amené de la position de fermeture à la position d'ouverture par contact avec la pièce, et dans lequel le dispositif (30, 40) comporte plusieurs sorties avec des éléments de fermeture (31, 41), et **en ce que** plusieurs éléments de fermeture sont amenés simultanément en contact avec la pièce (26).

8. Procédé selon la revendication 7, **caractérisé en ce que** l'on fait rouler un élément de fermeture (31, 41) sur la surface de la pièce (16, 26).
